(19) Europäisches Patentamt
European Patent Office
Office européen des brevets

(11) Veröffentlichungsnummer: **0 000 694**
**B1**

(12) # EUROPÄISCHE PATENTSCHRIFT

(21) Anmeldenummer: **78100226.6**

(22) Anmeldetag: **23.06.78**

(51) Int. Cl.³: **C 07 F 9/54**

(54) **Verfahren zur Herstellung von quartären Phosphoniumhydroxiden**

(30) Priorität: **20.07.77 DE 2732751**

(43) Veröffentlichungstag der Anmeldung:
**21.02.79 Patentblatt 79/04**

(45) Bekanntmachung des Hinweises auf die Patenterteilung:
**17.09.80 Patentblatt 80/19**

(84) Benannte Vertragsstaaten:
**BE CH DE FR GB NL**

(56) Entgegenhaltungen:
**US - A - 3 251 883**
**Tetrahedron Letters No. 37, 1976 Seiten 3321—4**

(73) Patentinhaber: **HOECHST AKTIENGESELLSCHAFT Postfach 80 03 20**
**D - 6230 Frankfurt**
**Main 80 (DE)**

(72) Erfinder: **Hestermann, Klaus, Dr.**
**Am Wachberg 68**
**D - 5042 Erftstadt Bliesheim (DE)**
**Hartfried, Vollmer, Dr.**
**Berliner Strasse 1**
**D - 5042 Erftstadt Liblar (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 000 694 B1

## Verfahren zur Herstellung von quartären Phosphoniumhydroxiden

Die Erfindung betrifft ein Verfahren zur Herstellung von quartären Phosphoniumhydroxiden der allgemeinen Formel

$$[(CH_3)_{4-n}\ P(-CH_2-\underset{\displaystyle OH}{\underset{|}{CH}}-R)_{n\text{-}}7OH \qquad (I)$$

ir der R entweder Wasserstoff oder einen aliphatischen bzw. einen aromatischen Kohlenwasserstoff mit 1 bis 12 C-Atomen, insbesondere mit 1 bis 6 C-Atomen, und n 1 oder 2 bedeutet, durch Umsetzung von Di- oder Trimethylphosphin mit Epoxiden der allgemeinen Formel

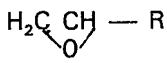 (II)

in der R obige Bedeutung hat, in einem Wäßrigen Medium.

Es ist bekannt, daß sich Epoxide mit Phosphinen in Abwesenheit von Säuren in einem Wäßrigen oder wasserfreien Medium zu Betainen oder Phosphoniumhydroxiden umsetzen (G.M. Kosolapoff, L. Maier, Organic Phosphorus Compounds, Wiley-Interscience, Vol. 2, 194 [1972]). Nach dieser bekannten Arbeitweisse wird bei pH-Werten von etwa 7 gearbeitet.

Nachteilig an dieser Methode ist, daß nach Zusammenbringen der Ausgangssubstanzen, die Reaktion erst mit großer Verzögerung einsetzt, dann aber sehr stürmisch verläuft. Dies hat zur Folge, daß bei der sich exotherm vollziehenden Umsetzung da Reaktionsgemisch rasch erwärmt wird und ein Teil des leichtflüchtigen Di- bzw. Trimethylphosphins aus dem Reaktionsgefäß ausgetrieben wird, bevor es in der Lage ist, mit dem Epoxid zu reagieren.

Überraschenderweise wurde nun gefunden, dâ sich die bekannte Arbeitsweise zur Herstellung der quartären Phosphoniumhydroxide verbessern läßt, wenn man das wäßrige Medium mit Hilfe von Basen auf einen pH-Wert $\geqslant$ 12 einstellt, bevor man die Ausganskomponenten in diesem Medium miteinander vermischt. Als wäßriges Medium kann Wasser, allein oder im Gemisch mit einem organischen Lösungsmittel eingesetzt werden. Vorzugsweise wird die Umsetzung bei Temperaturen zwischen $-10$ und $+35$°C durchgeführt. Es empfiehlt sich pro Mol Di- bzw. Trimethylphosphin 1 bis 10 Mol, vorzugsweise 3 bis 5 Mol, Wasser einzusetzen und das Epoxid im Überschuß zum Methylphosphin, bezogen auf die zur Bildung des gewünschten Phosphoniumhydroxide erforderlichen stöchiometrischen Menge zu verwenden. Den pH-Wert des wäßrigen Mediums stellt man insbesondere mit Hilfe eines Alkalihydroxide ein.

Im Prinzip führt man das erfindungsgemäße Verfahren so durch, daß man in einem Reaktor, der mit einem Rührer, einem Thermometer, einem pH-Meter, einem Gaseinleitungsrohr, einem Rückflußkühler mit Gasauslaß und einem Tropftrichter versehen ist, da Arbeitsmedium vorlegt. Dieses besteht entweder hur aus Wasser oder aus einem Gemisch von Wasser mit einem organischen Lösungsmittel, das in Wasser löslich ist. beispielsweise ein Alkohol, oder das in Wasser unlöslich ist, beispielsweise ein Äther. Es empfiehlt sich, daß pro Mol Dimethylphosphin bzw. Trimethylphosphin wenigstens 1 Mol Wasser vorgegeben wird. Das Wasser wird dann mit einer geringen Menge einer Base, insbesondere NaOH, auf einen pH-Wert gleich oder größer als 12 eingestellt.

Dann wird unter Rühren die umzusetzende Menge Dimethylphosphin bzw. Trimethylphosphin zugefügt, das bei Vorlage von ausschließlich Wasser in diesem suspendiert wird, oder bei Anwesenheit eines geeigneten Alkohols in dem Wasser-Alkohol-Gemisch gelöst wird, bzw. bei Anwesenheit eines entsprechenden in Wasser nicht löslichen Athers in diesem gelöst wird und mit dem Wasser eine Emulsion bildet. Anschließend erfolgt dann die Zugabe des Epoxides, das entsprechend seinem Aggregatzustand entweder über das Gaseinleitungsrohr oder über den Tropftrichter zudosiert wird. Nachdem sich unter intensivem Rühren bei Temperaturen von $-10$°C bis $+35$°C quartäres Phosphoniumhydroxid gebildet hat, steigt der pH-Wert im Kolben auf Werte $>$ 14 an.

Die Menge an zugefügten Epoxiden kann natürlich größer sein als dem zur Bildung des gewünschten Phosphonium-hydroxides erforderlichen stöchiometrischen Menge entspricht. Es besteht dann jedoch die Gefahr, daß der Überschuß an Epoxiden unter den Reaktionsbedingungen zu Polyglykolen weiterreagiert, di bekanntermaßen nur schwer vom gewünschten Phosphoniumhydroxid abtrennbar sind. Bevorzugt wird deshalb pro Mol Alkylphosphin 1 bzw. 2 Mol Epoxid umgesetzt. Günstig ist es auch, mit einem Überschuß an Alkylphosphin zu arbeiten, da dieses nach Reaktionsende leicht bei T $>$ 40°C abgetrennt und erneut eingesetzt werden kann. Die Abtrennung der Lösungsmittel vom gebildeten quartären Phosphoniumhydroxid erfolgt in bekannter Weise unter schonenden Bedingungen durch Destillation, u.U. bei Unterdruck. Die quartären Phosphoniumhydroxide werden als Ölige, äußerst hydroskopische, farblose Flüssigkeiten erhalten.

Ein besonderer Vorteil des erfindungsgemäßen Verfahrens ist, daß durch Neutralisation mit der entsprechenden Säure bezüglich des Anions jedes beliebige quartäre Phosphoniumsalz herstellbar ist.

Die auf die allgemein beschriebene Ausführungsform naturgemäß nicht beschränkte Erfindung ermöglicht erstmals die einfache Herstellung von Methyl - 2 - hydroxyalkyl(aralkyl) - phosphoniumhydroxiden, die in Form ihrer Salze weitläufig Anwendung finden als Flammfestausrüster, Vulkanisationsbeschleuniger, Phasentransferkatalysatoren, Pflanzenschutzmittel, oder Pharmazeutika.

Beispiel 1 $[(CH_3)_3PCH_2—CH_2OH]OH$

In einem Kolben, der mit einem Rührer, einem Thermometer, einem pH-Meter, einem Gaseinleitungsrohr, einem Rückflußkühler mit Gasauslaß und einem Tropftrichter versehen war, wurden 2,5 Mol (45 g) $H_2O$ vorgelegt. Das Wasser wurde auf 15°C temperiert. Unter Rühren wurde 0.5 Mol (38 g) $(CH_3)_3P$ darin suspendiert. Nach Beendigung der$(CH_3)_3P$- Zugabe wurde 0,5 Mol (22 g) Äthylenoxid unter kräftigem Rühren gasförmig eingeleitet. Erst nachdem etwa 1/4 der 0,5 Mol Äthylenoxid zugesetzt waren, setzte unter starker, nur schwer zu beherrschender Wärmeentwicklung die Reaktion ein. Die Folge davon war ein Verlust des leichtflüchtigen $(CH_3)_3P$ (Sdp.: 38°C). Danach konnte die Umsetzung unter Aufrechterhaltung der Temperatur von 15°C zu Ende geführt werden. Die erhaltene Phosphoniumhydroxidlösung wurde mit HCl-Lösung neutralisiert und zur Trockne bei 110°C und 20 Torr eingedampft. Das Produkt wurde mit 150 ml Äthanol aufgenommen und aus diesser Lösung mit 1000 ml Aceton des Trimethyl - 2 - hydroxyäthylphosphoniumchlorid

$$[(CH_3)_3PCH_2—CH_2—OH]Cl$$

als farblose Kristalle abgeschieden. Insgesamt wurden 55 g des Chlorides (Identifizierung siehe Beispiel 2) erhalten, was einer Ausbeute von 70.6%, bezogen auf $(CH_3)_3P$, entspricht. Zur Vermeidung der im ersten Beispiel offenkundig gewordenen, anfänglichen Verzögerung der Reaktion, was mit $(CH_3)_3P$-Verlusten verbunden war, wurde in den folgenden Beispielen in einem $H_2O$-enthaltenden Arbeitsmedium gearbeitet, das von Anbeginn einen pH-Wert 12 besaß.

Beispiel 2 $[(CH_3)_3PCH_2—CH_2OH]OH$

In einem Kolben, der mit einem Rührer, einem Thermometer, einem pH-meter, einem Gaseinleitungsrohr, einem Rückflußkühler mit Gasauslaß und einem Tropftrichter versehen war, wurden 5 Mol (90 g) $H_2O$ mit einem pH-Wert von 12 vorgelegt. Das Wasser wurde auf 15°C temperiert. Unter Rühren wurde 1 Mol (76 g) $(CH_3)_3P$ darin suspendiert. Nach Beendigung der $(CH_3)_3P$-Zugabe wurde 1 Mol (44 g) Äthylenoxid unter kräftigem Rühren gasförmig eingeleitet. Dabei mußte zur Aufrechterhaltung der Temperatur von 15°C gekühlt werden. Eine Verzögerung des Reaktionsbeginns konnte hier nicht festgestellt werden. Im Verlaufe der Reaktion verschwand die trübe Suspension von $(CH_3)_3P$ in $H_2O$ und es bildete sich eine klare Lösung von

$$[(CH_3)_3PCH_2—CH_2OH]OH$$

in $H_2O$ mit einem pH-Wert > 14. Diese Lösung wurde exakt halbiert und getrennt weiterverarbeitet. Der eine Teil wurde bei 30°C unter 0,1 Torr zu einer farblosen, öligen, außergewöhnlichen hygroskopischen Masse eingeengt (erhalten: 80 g; theroretisch: 69 g). Sie stellte das, mit $H_2O$ und NaOH verunreinigte quartäre Trimethyl - 2 - hydroxyäthyl - phosphoniumhydroxid dar. Die Verbindung wurde in Form des Chlorides durch NMR-Analyse ($^1H$ und $^{31}P$-Resonanz) identifiziert. Die Werte gelten für wäßrige (OH-Gruppe fällt mit $H_2O$ zusammen) Lösungen. Die H-Werte sind auf Tetramethylsilan (= 0 ppm), der P-shift ist auf 85%ige $H_3PO_4$ bezogen:

| | | | | | |
|---|---|---|---|---|---|
| P—$CH_3$ | : | 1,94 ppm | P | : | –26 ppm |
| P—$CH_2$ | : | 2,52 ppm | | | |
| $CH_2O$ | : | 4,00 ppm | | | |

Der andere Teil des ursprünglichen Umsetzungsproduktes wurde mit wäßriger HCl-Lösung neutralisiert. Das Lösungsmittel $H_2O$ wurde bei 110°C und 20 Torr abgedampft. Der erhaltene kristalline Festkörper wurde mit 150 ml Äthanol behandelt, wobei das Phosphoniumsalz in Lösung ging und vom ungelösten NaCl abgetrennt wurde. Aus der alkoholischen Lösung wurde durch Zugabe von 1000 ml Aceton das Trimethyl - 2 - hydroxyäthyl - phosphoniumchlorid

$$[(CH_3)_3PCH_2—CH_2OH]Cl$$

als farblose Kristalle abgescheiden. Insgesamt wurden 70 g des Chlorides erhalten, was einer Ausbeute von 89,7% entspricht.

Die Verbidung besaß einen Schmelzpunkt von 267°C.

Die Elementaranalyse ergab folgende Werte:

| | ber. | gef. |
|---|---|---|
| C | 38,6 | 38,8 |
| H | 9,1 | 9,0 |
| P | 19,9 | 19,6 |
| Cl | 22,1 | 22,1 |

Beispiel 3 $[(CH_3)_3PCH_2—CH_2OH]OH$

Es wurde die Umsetzung nach Beispiel 1 wiederholt, mit dem Unterschied, daß als Arbeitsmedium ein Gemisch auf 5 Mol $H_2O$ und 5 Mol Isopropanol eingesetzt wurde unde die Reaktionstemperatur 30°C betrug. Die erhaltene Phosphoniumhydroxid-Lösung wurde mit Salzäure neutralisiert und wie nach Beispiel 1 auf

$$[(CH_3)_3PCH_2—CH_2OH]Cl$$

aufgearbeitet. Es wurden 137 g Endprodukt entsprechend einer Ausbeute von 87,5% erhalten.

Beispiel 4 $[(CH_3)_3PCH_2—CH_2OH]OH$

Es wurde die Umsetzung nach Beispiel 1 weiderholt, mit dem Unterschied, daß als Arbeitsmedium eine Suspension von 10 Mol $H_2O$ and 3 Mol Diäthyläther eingesetzt wurde und die Reaktionstemperatur 0°C betrug. Die erhaltene wäßrige Phosphoniumhydroxid-Lösung wurde vom Äther getrennt, mit Salzsäure neutralisiert und wie nach Beispiel 1 auf

$$[CH_3)_3PCH_2—CH_2OH]Cl$$

aufgearbeitet. Es wurden 121 g Endprodukt entsprechend einer Ausbeute von 77,3% erhalten.

Beispiel 5 $[(CH_3)_3PCH_2—CHOH—CH_3]OH$

In der im 1. Beispiel beschriebenen Apparatur wurden 1 Mol (76 g) $(CH_3)_3P$ mit 1 Mol (58 g) Propylenoxid bei −10°C in einem Gemisch auf 5 Mol $H_2O$ und 5 Mol Isopropanol umgesetzt. Die erhaltene Phosphoniumhydroxid-Lösung wurde mit Salzäure neutralisiert und wie im 1. Beispiel Beschrieben auf

$$[(CH_3)_3PCH_2—CHOH—CH_3]Cl$$

aufgearbeitet. Es wurden 154 g Endproduckt entsprechend einer Ausbeute von 90.8% erhalten. Die Verbindung wurde durch NMR-Analyse identifiziert.

| | | | | | |
|---|---|---|---|---|---|
| $CH_3$ | : | 1,37 ppm | P | : | −25 ppm |
| $PCH_3$ | : | 1,92 ppm | | | |
| $PCH_2$ | : | 2,44 ppm | | | |
| CH | : | 4,24 ppm | | | |

Die Verbindung besaß einen Schmelzpunkt von 169°C.

Die Elementaranalyse ergab folgende Werte:

| | ber. | gef. |
|---|---|---|
| C | 42,5 | 42,6 |
| H | 9,5 | 9,5 |
| P | 18,2 | 18,0 |
| Cl | 20,3 | 20,4 |

Beispiel 6 $[(CH_3)_3P—CH_2—CHOH—$ 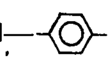 $]Cl$

In der im 1. Beispiel beschriebenen Apparatur wurde 1 Mol (76 g) $(CH_3)_3P$ mit 1 Mol (120 g) Styroloxid bei 15°C in 8 Mol $H_2O$ umgesetzt.

Die erhaltene Phosphoniumhydroxid-Lösung wurde mit Salzsäure neutralisiert und auf

$$[(CH_3)_3P—CH_2—CHOH—PH]Cl$$

aufgearbeitet. Die Verbindung konnte allerdings nicht als kristalline Substanz, sondern lediglich als sirupöse Masse erhalten werden. Es wurden 180 g Endprodukt entsprechend einer Ausbeute von 77,7% erhalten.

Die Verbindung wurde durch NMR-Analyse identifiziert:

| | | | | | |
|---|---|---|---|---|---|
| $PCH_3$ | : | 1,92 ppm | P | : | −24 ppm |
| $PCH_2$ | : | 2,72 ppm | | | |
| CH | : | 5,13 ppm | | | |
| 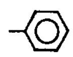 | : | 7,48 ppm | | | |

Die Elementaranalyse ergab folgende Werte:

| | ber. | gef. |
|---|---|---|
| C | 57,2 | 56,8 |
| H | 7,8 | 8,0 |
| P | 13,4 | 13,8 |
| Cl | 14,9 | 14,5 |

Beispiel 7 $[(CH_3)_2P(CH_2—CHOH—CH_3)_2]Cl$

In der im 1. Beispiel beschriebenen Apparatur wurde 1 Mol (62 g) $(CH_3)_2PH$ mit 2 Mol (116g) Propylenoxid bei 10°C in 6 Mol $H_2O$ mit einem pH-Wert von 12 umgesetzt. Die erhaltene Phosphoniumhydroxid-Lösung wurde mit Salzsäure neutralisiert und auf

$$[(CH_3)_2(CH_2—CHOH—CH_3)_2]Cl$$

aufgearbeitet. Die Verbindung konnte allerdings nicht als kristalline Substanz, sondern lediglich als sirupöse Masse erhalten werden. Es wurden 176 g Endprodukt entsprechend einer Ausbeute von 82,4% erhalten.

Die Verbindung wurde durch NMR-Analyse identifiziert:

| | | | | | |
|---|---|---|---|---|---|
| $CH_3$ | : | 1,34 ppm | P | : | −27 ppm |
| $PCH_3$ | : | 1,98 ppm | | | |
| $PCH_2$ | : | 2,47 ppm | | | |
| CH | : | 4,25 ppm | | | |

| | ber. | gef. |
|---|---|---|
| C | 45,0 | 44,7 |
| H | 9,5 | 9,4 |
| P | 14,5 | 14,7 |
| Cl | 16,1 | 15,9 |

**Patentansprüche:**

1. Verfahren zur Herstellung von quartären Phosphoniumhydroxiden der allgemeinen Formel

$$[(CH_3)_{4-n}\,P(—CH_2—\underset{\displaystyle OH}{\underset{|}{CH}}—R)_n]\,OH \qquad (I)$$

in der R entweder Wasserstoff oder einen aliphatischen bzw. einen aromatischen Kohlenwasserstoff mit 1 bis 12 C-Atomen, insbesondere jedoch mit 1 bis 6 C-Atomen, und n 1

oder 2 bedeutet, durch Umsetzung von Di-oder Trimethylphosphin mit Epoxiden der allgemeinen Formel

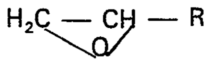 (II)

in der R obige Bedeutung hat, in einem wäßrigen Medium, *dadurch gekennzeichnet,* daß man das wäßrige Medium mit Hilfe von Basen auf einen pH-Wert$\geqslant$12 einstellt, bevor man die Ausgangkomponenten in diesem Medium miteinander vermischt.

2. Verfahren nach Anspruch 1, *dadurch gekennzeichnet,* daß man als wäßriges Medium Wasser, allein oder im Gemisch mit einem organischen Lösungsmittel, einsetzt.

3. Verfahren nach Anspruch 1 oder 2, *dadurch gekennzeichnet,* daß man die Umsetzung bei Temperaturen zwischen —10 und +35°C durchführt.

4. Verfahren nach einem der Ansprüche 1 bis 3, *dadurch gekennzeichnet,* daß man pro Mol Di- bzw. Trimethylphosphin 1 bis 10 Mol Wasser einsetzt.

5. Verfahren nach Anspruch 4, *dadurch gekennzeichnet,* daß man pro Mol Di- bzw. Trimethylphosphin 3 bis 5 Mol Wasser einsetzt.

6. Verfahren nach einem der Ansprüche 1 bis 5, *dadurch gekennzeichnet* daß man das Epoxid im Uberschuß zum Methylphosphin, bezogen auf die zur Bildung des gewünschten Phosphoniumhydroxids erforderlichen stöchiometrischen Menge einsetzt.

7. Verfahren nach einem der Ansprüche 1 bis 6, *dadurch gekennzeichnet,* daß man den pH-Wert des wäßrigen Mediums mit Hilfe eines Alkalihydroxids einstellt.

## Claims

1. Process for making quaternary phosphonium hydroxides of the general formula:

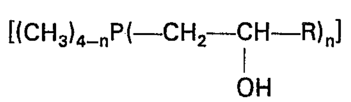 (I)

in which R stands either for hydrogen or an aliphatic or aromatic hydrocarbon having 1 to 12 carbon atoms, preferably 1 to 6 carbon atoms, and *n* stands for 1 or 2, wherein di- or trimethylphosphine is reacted in an aqueous medium with epoxides of the general formula:

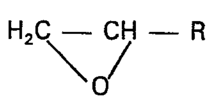 (II)

in which R has the meaning given above, which comprises: establishing a pH-value of $\geqslant$ 12 in the aqueous medium by means of a base and mixing the starting materials in said medium.

2. Process as claimed in claim 1, wherein the aqueous medium is water which is used alone or in admixture with an organic solvent.

3. Process as claimed in claim 1 or 2, wherein the reaction is effected at temperatures of —10 to +35°C.

4. Process as claimed in any of claims 1 to 3, wherein 1 to 10 mol of water is used per mol of di- or trimethylphosphine.

5. Process as claimed in claim 4, wherein 3 to 5 mol of water is used per mol of di- or trimethylphosphine.

6. Process as claimed in any of claims 1 to 5, wherein the epoxide is used in excess over the methylphosphine, the excess being based on the stoichiometric quantity necessary to ensure the formation of the particular phosphonium hydroxide to be produced.

7. Process as claimed in any of claims 1 to 6, wherein the pH-value of the aqueous medium is established by means of an alkali metal hydroxide.

## Revendications

1. Procédé de préparation d'hydroxydes de phosphonium quaternaires de formule générale:

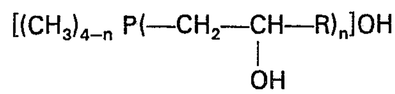 (I)

dans laquelle R représente soit l'hydrogène, soit un hydrocarbure aliphatique ou aromatique en $C_1$—$C_{12}$, de préférence $C_1$—$C_6$, et n représente 1 ou 2, par réaction de di- ou triméthylphosphine avec des époxydes de formule générale:

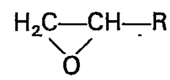 (II)

dans laquelle R a la signification déjà donnée, en milieu aqueux, caractérisé en ce que l'on établit, dans le milieu aqueux, une valeur de pH égale ou supérieure à l'aide d'une base, et on mélange ensuite les composants de départ dans ce milieu.

2. Procédé selon la revendication 1, caractérisé en ce que l'on utilise, comme milieu aqueux, l'eau seule ou en association avec un solvant organique.

3. Procédé selon la revendication 1 ou 2, caractérisé en ce que l'on effectue la réaction à des températures comprises entre —10 et +35°C.

4. Procédé selon l'une quelconque des revendications 1 à 3, caractérisé en ce que l'on utilise 1 à 10 moles d'eau par mole de di- ou triméthylphosphine.

5. Procédé selon la revendication 4, caractérisé en ce que l'on utilise 3 á 5 moles d'eau par mole de di- ou triméthylphosphine.

6. Procédé selon l'une quelconque des revendications 1 à 5, caractérisé en ce que l'on

utilise l'epoxyde en excès, par rapport à la quantité steochiométrique de méthylphosphine nécessaire pour la formation de l'hydroxide de phosphonium recherché.

7. Procédé selon l'une quelconque des revendications 1 à 6, caractérisé en ce que l'on établit la valeur de pH dans le milieu aqueux à l'aide d'un hydroxide alcalin.